Europäisches Patentamt

European Patent Office

Office européen des brevets

(11) Veröffentlichungsnummer: **0 017 081**
**B1**

(12) **EUROPÄISCHE PATENTSCHRIFT**

(45) Veröffentlichungstag der Patentschrift:
13.04.83

(51) Int. Cl.³: **G 01 D 7/00**, G 01 D 13/22 //
G01S7/56

(21) Anmeldenummer: **80101433.3**

(22) Anmeldetag: **19.03.80**

(54) Vorrichtung zur optischen Anzeige von physikalischen Grössen.

(30) Priorität: **24.03.79 DE 2911709**

(43) Veröffentlichungstag der Anmeldung:
**15.10.80 Patentblatt 80/21**

(45) Bekanntmachung des Hinweises auf die Patenterteilung:
**13.04.83 Patentblatt 83/15**

(84) Benannte Vertragsstaaten:
**FR GB IT SE**

(56) Entgegenhaltungen:
**DE-C-289 678**
**US-A-3 267 413**
**US-A-3 713 143**
**US-A-4 122 428**

(73) Patentinhaber: **VDO Adolf Schindling AG,**
**Gräfstrasse 103, D-6000 Frankfurt/Main (DE)**

(72) Erfinder: **Bergk, Günther, Lahnstrasse 4,**
**D-6096 Raunheim (DE)**

(74) Vertreter: **Könekamp, Herbert, Dipl.-Ing., Sodener**
**Strasse 9, D-6231 Schwalbach (DE)**

## Vorrichtung zur optischen Anzeige von physikalischen Größen

Die Erfindung bezieht sich auf eine Vorrichtung zur optischen Anzeige von physikalischen Größen, mit mindestens einem Leuchtelement, das auf einem beweglichen Körper angeordnet ist, wobei das Leuchtelement zu definierten Zeiten und für vorgebbare Zeitabschnitte zum Aufleuchten gebracht werden kann.

Für die Anzeige von physikalischen Größen, wie beispielsweise Geschwindigkeiten, Zeiten, Längen, Frequenzen oder Temperaturen, sind analoge und digitale Anzeigevorrichtungen bekannt. Bei den analogen Vorrichtungen wird die darzustellende Größe mit Hilfe eines seine Lage kontinuierlich verändernden Zeigers oder dergleichen angezeigt. Bekannte Anwendungsfälle derartiger Analoganzeigen sind die Geschwindigkeits- oder Drehzahlmesser in Kraftfahrzeugen, die Quecksilbersäulen von Thermometern oder die Zeiger von Uhren. In neuerer Zeit finden immer häufiger Digitalanzeiger Verwendung, bei denen der Zahlenwert einer physikalischen Größe mit Hilfe von Ziffern direkt angezeigt wird, beispielsweise durch Sieben-Segment-Anzeigen.

Neben der analogen und der digitalen Anzeige von Größen sind auch nach Hybrid-Anzeigen vorgeschlagen worden, bei denen punkt- oder strichförmige Leuchtelemente derart zusammenschaltbar sind, daß sie Zeiger oder dergleichen bilden. So ist beispielsweise eine Armbanduhr bekannt, deren Zeiger aus Leuchtelementen bestehen, die auf einer Geraden angeordnet sind, wobei diese Zeiger schrittweise fortgeschaltet werden können.

Eine solche quasi-analoge Anzeigevorrichtung ist auch bei Radargeräten bekannt, die für die Erkennung von Fischschwärmen vorgesehen sind. Hierbei erfolgt die Anzeige durch eine rotierende Neon-Glimmlampe auf einer Rundskala.

Aus der US-A-4 122 428 ist eine der eingangs beschriebenen Vorrichtung entsprechende Vorrichtung bekannt. Durch diese mit einem Leuchtelement versehene Vorrichtung ist nachteiligerweise nur eine einzige physikalische Größe anzeigbar.

Bei einer weiteren aus der US-A-3 713 143 bekannten Vorrichtung sind zwar mehrere Leuchtelemente vorhanden. Sie können aber nur eine physikalische Größe anzeigen.

Aufgabe der Erfindung ist es eine Vorrichtung nach dem Oberbegriff zu schaffen, von der mit einfachen Mitteln gleichzeitig und voneinander unabhängig mehrere physikalische Größen anzeigbar sind.

Diese Aufgabe wird erfindungsgemäß dadurch gelöst, daß mehrere aus einem oder mehreren Leuchtelementen gebildete, quer zur Bewegungsrichtung des beweglichen Körpers verlaufende Geraden auf dem beweglichen Körper vorgesehen und die Leuchtelemente isoliert ansteuerbar sind.

Diese Vorrichtung ermöglicht es, sowohl lineare Anzeigen als auch kreisring- oder kreissektorförmige Anzeigen hintereinander und/oder übereinander anzuordnen. Damit können auf geringem Raum ohne das Erfordernis des Umschaltens mehrere voneinander unabhängige physikalische Größen gleichzeitig angezeigt werden.

Ausführungsbeispiele der Erfindung sind in der Zeichnung dargestellt und werden im folgenden näher beschrieben. Es zeigt

Fig. 1 die Seitenansicht einer Vorrichtung mit Schleifring-Energiezuführung,

Fig. 2 eine Variante der Schleifring-Energiezuführung,

Fig. 3 eine Schleifring-Übertragung für zwei Leuchtkreise,

Fig. 4 eine Seitenansicht einer motorgetriebenen Anzeigescheibe,

Fig. 5 eine Draufsicht auf den Motorantrieb,

Fig. 6 eine Anzeigescheibe von unten,

Fig. 7 eine Draufsicht auf die Anzeigescheibe,

Fig. 8 eine induktive Energieankopplung der Anzeigescheibe,

Fig. 9 eine induktive Übertragung für drei lichtemittierende Elemente,

Fig. 10a—10e verschiedene Darstellungsmöglichkeiten der Anzeigescheibe,

Fig. 11 eine Schaltungsanordnung für die Anschaltung von Leuchtelementen.

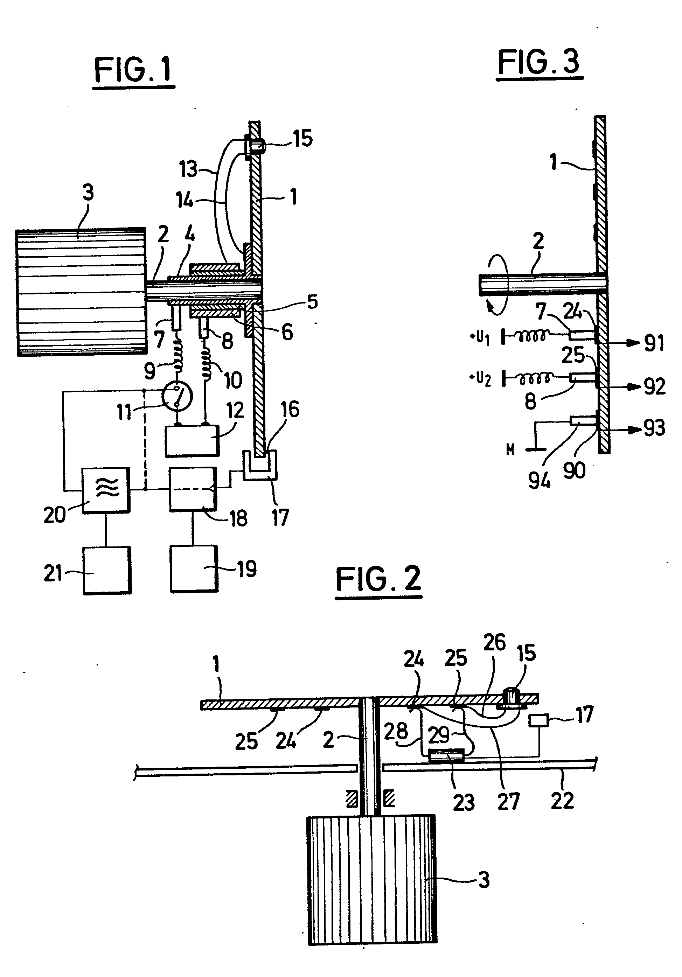

In der Fig. 1 ist eine Prinzipdarstellung der erfindungsgemäßen Vorrichtung gezeigt, mit der physikalische Größen optisch dargestellt werden können. Eine kreisförmige Scheibe 1 wird hierbei über eine Welle 2 von einem Motor 3 angetrieben. Um die Welle 2 ist eine erste Kontakthülse 4 gegeben, die ihrerseits von einer Isolierhülse 5 umfaßt wird. Auf dieser Isolierhülse 5 befindet sich wiederum eine zweite Kontakthülse 6. Sowohl an die erste als auch an die zweite Kontakthülse 4, 6 — die als Schleifring anzusehen sind — ist jeweils ein ortsfester Schleifkontakt 7, 8 mittels einer Feder 9, 10 angedrückt. Diese Schleifkontakte sind über einen steuerbaren Schalter 11 mit einer Spannungsquelle 12 verbunden.

Von den Kontakthülsen 4, 6 führt jeweils eine Verbindungsleitung 13, 14 auf eine auf der Scheibe 1 angeordnete lichtemittierende Diode 15, die hierdurch mit elektrischer Energie versorgt werden kann. Die Scheibe 1 weist auf ihrem Umfang ferner einen Signalgeber 16 auf, der mit einem Signalaufnehmer 17 zusammenwirkt. Der Ausgang des Signalaufnehmers 17 ist mit einem Zeitglied 18 verbunden, das von einer Stelleinrichtung 19 beeinflußbar ist. Von dem Ausgang des Zeitglieds 18 führt eine Verbindung auf einen Oszillator 20, der über eine weitere Stelleinrichtung 21 hinsichtlich seiner Oszillatorfrequenz steuerbar ist. Über den Ausgang des Oszillators 20 oder auch direkt über den Ausgang des Zeitglieds 18 kann der Schalter 11 angesteuert werden.

Die Betriebsweise der in der Fig. 1 gezeigten Vorrichtung ist folgende:

Mit Hilfe des Motors 3 wird die Scheibe 1 in eine derartige Drehbewegung versetzt, daß die Diode 15 von dem menschlichen Auge nur noch als Strich wahrgenommen wird. Die Rotationsfrequenz der Scheibe 1 liegt also über der Verschmelzungsfrequenz des menschlichen Auges, d. h. bei ca. 25 U/sec.

Wird nun die Diode 15 durch Schließen des Schalters 11 an elektrische Spannung gelegt, so erkennt man zunächst nur einen leuchtenden Kreis. Dieser geschlossene Kreis kann jedoch dadurch unterbrochen werden, daß die elektrische Spannung nur für einen Bruchteil der Umlaufzeit der Scheibe 1 an die Diode gelegt wird. Um diesen Bruchteil zu bestimmen, wird durch den Signalaufnehmer 17 der Durchgang des Signalgebers 16 festgestellt, d. h. es wird ein bestimmter Punkt auf dem Umfang der Scheibe als Nullpunkt festgelegt. Von diesem Nullpunkt aus kann dann diejenige Zeit bestimmt werden, für welche die Diode 15 an elektrische Energie angeschlossen werden soll. Hierbei wird das Zeitglied 18 jedesmal aktiviert, nachdem der Signalgeber 16 an dem Signalaufnehmer vorbeigelaufen ist. Das Zeitglied 18 gibt sodann für eine Zeit, die mittels der Stelleinrichtung 19 bestimmt werden kann, ein Ausgangssignal ab, welches das Schließen des Schalters 11 bewirkt. Während dieser Zeit leuchtet also die Diode 15 auf. Wird die Zeit bei 25 U/sec der Scheibe beispielsweise auf $^1/_{50}$ sec festgelegt, so erkennt das Auge nur noch einen leuchtenden Halbkreis. Durch die Überlagerung einer Frequenz des Oszillators 20 kann dieser leuchtende Halbkreis noch einmal alternierend unterbrochen werden.

In der Fig. 2 ist eine weitere Prinzipdarstellung gezeigt, bei welcher die elektrische Energie über Schleifkontakte an eine Leuchtdiode geführt wird. Die Scheibe 1 wird hierbei wieder über eine Welle 2 von einem Motor 3 angetrieben. Zwischen der Scheibe 1 und dem Motor 3 ist eine Platine 22 angeordnet, die eine Energieversorgungs- und Auswerteeinrichtung 23 aufweist. Diese Einrichtung 23 wird von einem Signalaufnehmer 17 beaufschlagt und wertet dessen Signale auf ähnliche Weise aus, wie dies bereits im Zusammenhang mit der Fig. 1 beschrieben wurde.

Auf der Unterseite der Scheibe 1 sind metallische Bahnen 24, 25 vorgesehen, mit denen elektrische Anschlüsse 26, 27 der Leuchtdiode 15 verbunden sind. An diesen Bahnen 24, 25 liegen außerdem Schleifkontakte 28, 29 an, welche elektrische Energie auf die Bahnen 24, 25 geben.

Die Fig. 3 zeigt eine Schleifringübertragung für zwei Leuchtkreise, mit der es möglich ist, zwei Leuchtelemente 91, 92 mit zwei Spannungen $U_1$, $U_2$ zu versorgen, wobei 93 den gemeinsamen dritten Anschluß darstellt, der mittels der Bürste 94 an Masse gelegt ist.

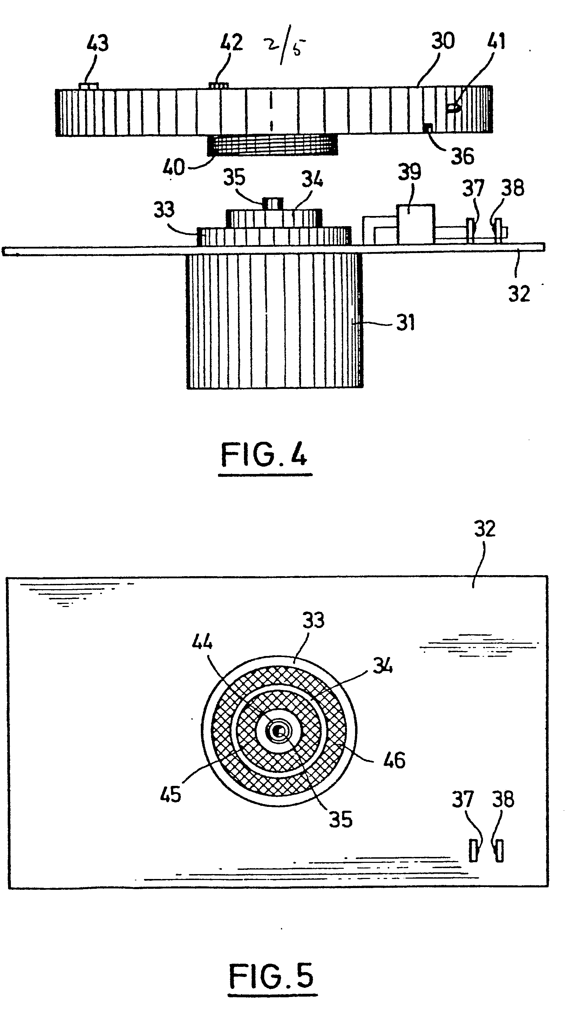

In der Fig. 4 ist eine Vorrichtung gezeigt, bei der die elektrische Energie für die Leuchtelemente kontaktlos übertragen wird. Man erkennt hierbei wieder eine Scheibe 30, die zur Verdeutlichung der Erfindung von dem Motor 31 abgehoben ist. Zwischen dem Motor 31 und der Scheibe 30 ist eine Platine 32 vorgesehen, an die der Motor 31 angeflanscht ist und die zwei konzentrische Schalen 33, 34 aufweist. Die Antriebsachse 35 des Motors 31 befindet sich innerhalb des kleineren Schalenkerns 34 und ist durchbohrt. In dem Umfang der Scheibe 30 ist eine Kerbe 36 vorgesehen, die als Signalgeber wirkt. Im Betriebszustand, d. h., wenn die Scheibe 30 mit der durchbohrten Antriebsachse 35 verbunden ist, durchläuft der Rand der Scheibe 30 eine aus Lichtquelle 37 und Lichtsensor 38 bestehende Lichtschranke, so daß jedesmal dann, wenn die Kerbe 36 die Lichtschranke passiert, der Lichtsensor 38 anspricht. Die Steuerimpulse der Lichtschranke werden sodann auf eine Auswerteeinrichtung 39 gegeben, welche in der Fig. 3 nicht sichtbare Wicklungen innerhalb der Schalenkerne 33, 34 ansteuert. Diese Wicklungen werden an Spannung gelegt und induzieren in einer weiteren Wicklung 40, die sich auf einem mit der Scheibe 30 verbundenen Zylindermantel befindet, eine Spannung, welche ein Leuchtelement mit elektrischer Energie versorgt.

Dieses Leuchtelement, z. B. eine auf dem Umfang der Scheibe 30 angebrachte Diode 41, leuchtet dann während der Zeit der Energieversorgung auf. Statt einer auf dem Umfang angebrachten Diode 41 können auch mehrere Dioden 42, 43 auf der Oberfläche der Scheibe 30 vorgesehen sein, die parallel oder in Serie an der induzierten Spannung liegen.

In der Fig. 5 ist eine Draufsicht auf die Platine 32 gezeigt, wobei die Schalenkerne 33, 34 und die Antriebsachse 35 erkennbar sind. Um die Antriebsachse 35 ist eine weitere Schale 44 gezogen, die eine Wicklung 45 auf der einen Seite begrenzt, während die andere Seite dieser Wicklung 45 durch den Schalenkern 34 begrenzt wird. In dem Zwischenraum zwischen dem Schalenkern 33 und dem Schalenkern 34 befindet sich eine weitere Wicklung 46. Beide Wicklungen 45, 46 sind getrennt über die Einrichtung 39 ansteuerbar, so daß beispielsweise zwei verschiedene Leuchtdioden 41, 42 oder 42, 43 getrennt zum Aufleuchten gebracht werden können.

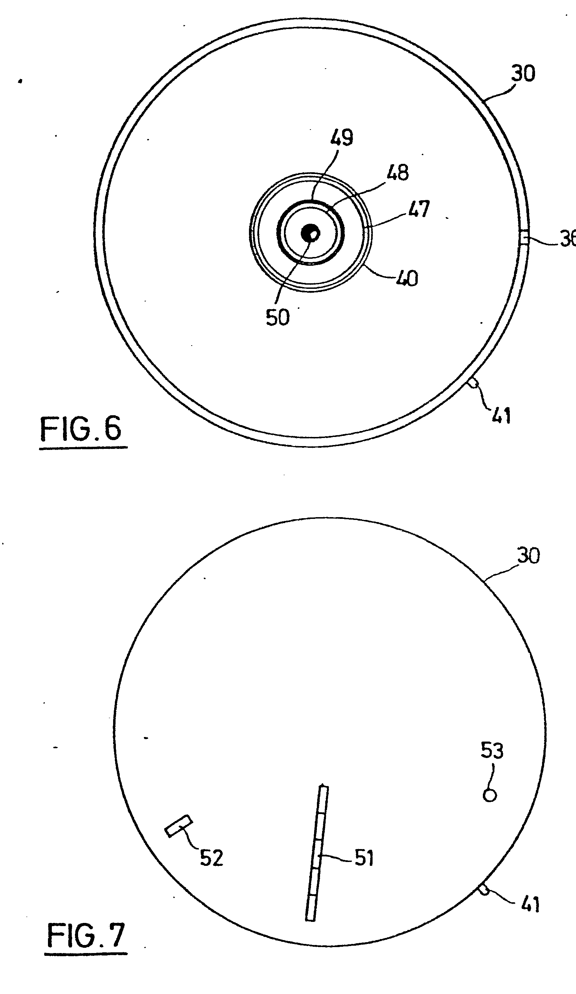

In der Fig. 6 ist die Scheibe 30 noch einmal näher dargestellt, und zwar in einer Ansicht von unten. Man erkennt hierbei wieder die Einkerbung 36, die sich am Umfang der Scheibe 30 befindet, sowie die Wicklung 40, die auf einem Zylindermantel 47 angeordnet ist. Auf einem weiteren Zylindermantel 48, der konzentrisch zu dem ersten Zylindermantel 47 angeordnet ist, ist ebenfalls eine Wicklung 49 angebracht. Mit den beiden Wicklungen 40, 49 können beispielsweise zwei verschiedene Dioden oder Diodenketten angesteuert werden.

Im Mittelpunkt der Kreisscheibe 30 befindet sich ein Stift 50, der zur Herstellung der Verbindung mit dem Motor dient.

Wenn die Scheibe 30 mit dem Motor 31 (Fig. 4) gekoppelt wird, greift also der Stift 50 der Scheibe 30 in die Bohrung des Stifts 35 (Fig. 5) ein, und gleichzeitig gelangt der Zylindermantel 47 mit der Wicklung 40 zwischen die Schalenkerne 33, 34, während der Zylindermantel 48 mit der Wicklung 49 zwischen den Schalenkern 34 und den Stift 35 gelangt.

In der Fig. 7 ist die Scheibe 30 noch einmal in der Draufsicht dargestellt. Hierbei erkennt man wieder die Leuchtdiode 41 auf dem Umfang, eine Leuchtelementenkette 51, zwei weitere Leuchtelemente 52 sowie eine weitere Leuchtdiode 53.

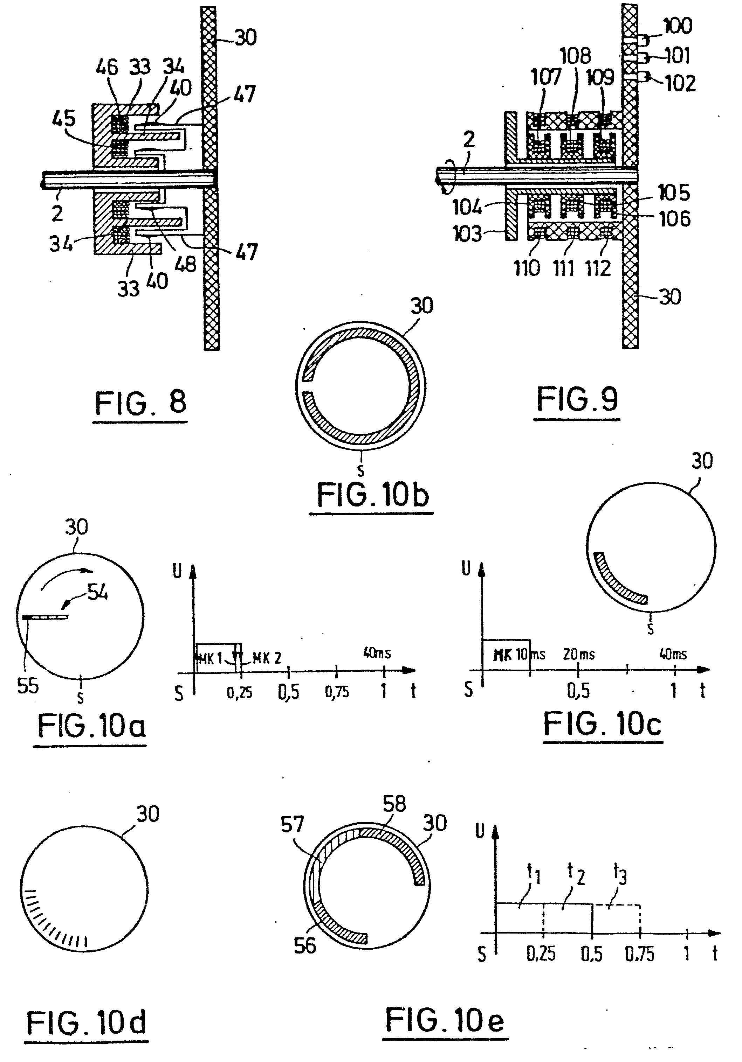

In der Fig. 8 sind die Schalenkerne 33, 34 der Fig. 5 bzw. die Spule 40 der Fig. 4 noch einmal im Schnitt von der Seite dargestellt. Die Oszillatorbzw. Primärwicklungen liegen hierbei im unteren Teil der feststehenden Schalenkernhälfte. Dagegen tauchen die Sekundärwicklungen wie zwei übereinander angeordnete Lautsprecherschwingspulen in den feststehenden Schalenkern ein.

Die Fig. 9 zeigt ein Beispiel, auf welche Weise drei verschiedene lichtemittierende Dioden 100, 101, 102 getrennt induktiv ansteuerbar sind. Hierbei ist ein feststehender Flansch 103 mit drei Rollenkernen 104, 105, 106 vorgesehen, welche die Wicklungen 107, 108, 109 für drei Oszillatoren enthalten. Die Wicklungen 107, 108, 109 bilden den Primärteil der induktiven Übertragung. Die drei zugehörigen Sekundärwicklungen 110, 111, 112 rotieren genau über dem jeweils zugeordneten Primärteil.

In der Fig. 10a ist eine ähnliche Kreisscheibe 30 wie in Fig. 6 dargestellt; es sind jedoch nur fünf lichtemittierende Dioden 54 gezeigt. Soll mit einer dieser Dioden 54, z. B. der am äußeren Rand angeordneten Diode 55, ein wandernder Leuchtpunkt dargestellt werden, so wird die Scheibe 30 mit beispielsweise 1500 U/min gedreht, was einer Umdrehungszeit der Scheibe 30 von 40 msec entspricht. Die Diode 55 wird dann für bestimmte Zeiten eingeschaltet.

Die Zeit, zu der die Zeitzählung beginnt liegt im Punkt S. Zu diesem Zeitpunkt wird ein Zeitglied, z. B. eine monostabile Kippstufe MK1 durch einen Lichtschrankenimpuls aktiviert. Nach Ablauf der Impulsdauer der Kippstufe MK1 wird dann eine zweite Kippstufe getriggert, wobei die Impulslänge vom MK2 die Freigabezeit der induktiven Übertragung und somit die Leuchtdauer der Dioden bestimmt.

Bei Verwendung einer monostabilen Kippstufe als Zeitglied kann auf einfache Weise auch eine Lücke in einem kreisförmigen Leuchtbalken (Fig. 10b) stetig vergrößert werden, d. h. statt eines Punktes wandert nun eine Lücke. Hierzu wird dasselbe Impulsdiagramm verwendet, wie es in der Fig. 10 gezeigt ist. Die induktive Übertragung wird dabei jedoch vom invertierten Ausgang der zweiten monostabilen Kippstufe MK2 gesteuert. Die Impulslänge der zweiten Kippstufe MK2 bestimmt dabei die Breite der Leuchtlücke, während die Impulslänge der ersten Kippstufe MK1 die Stellung der Lücke festlegt.

In der Fig. 10c ist dargestellt, auf welche Weise ein längenveränderbarer Balken darstellbar ist. Hierbei wird die Scheibe 30 wieder mit 1500 U/min gedreht und eine monostabile Kippstufe in ihrer Kippzeit stetig verändert. Das Triggern erfolgt wieder durch Lichtschrankenimpulse. Das Leuchtelement leuchtet dann entsprechend der Impulslänge dieser Kippstufe. Soll mit dieser Anordnung, die nur eine Kippstufe und ein Leuchtelement benötigt, ein konstanter und halbkreisförmiger Balken dargestellt werden, so wird die Leuchtdiode 55 pro Scheiben-Umdrehung nur für 20 m sec angeschaltet, dies jedoch 25mal pro Sekunde. Für die Betrachter, dessen Auge eine solche Frequenz nicht mehr auflösen kann, ergibt sich somit ein absolut stillstehender und flackerfreier Lichtbalken von halbkreisförmiger Gestalt.

In der Fig. 10d ist eine weitere Darstellungs-Variante gezeigt, welche es gestattet, mit nur einer Diode einen längenveränderbaren Strichbalken zu erzeugen.

Diese Diode ist zweckmäßigerweise sehr schmal und scharfzeichnend ausgebildet. Das Impulsdiagramm ist dabei dasselbe wie in der Fig. 10c; es wird lediglich eine zusätzliche Maßnahme getroffen, um die Lücken zwischen den Strichen zu erzeugen. Diese Maßnahme kann beispielsweise darin bestehen, daß die Richtcharakteristik einer lichtemittierenden Diode mit einer entsprechenden Oszillatorfrequenz der induktiven Übertragung gekoppelt wird. Dabei gilt folgende Beziehung:

$$\frac{f}{u} = \frac{U}{a} \cdot \frac{u}{a} = Z$$

worin

f = Oszillatorfrequenz der induktiven Übertragung in Hz;

U = Umdrehungen des Motors bzw. des Leuchtelements pro Sekunde;

U = Umfang des Kreises des Leuchtelements in mm;

a = Abstand der Striche in mm;

Z = Anzahl der Striche, bezogen auf einen 360° Umfang.

Soll beispielsweise pro Winkelgrad ein Strich dargestellt werden, so ist $Z = 360°$. Die Oszillatorfrequenz der induktiven Übertragung errechnet sich dann allgemein nach folgenden Beziehungen:

$$\frac{f}{u} = \frac{U}{a} \quad \text{oder} \quad \frac{f}{u} = Z \quad \text{bzw.} \quad f = u \cdot Z.$$

Bei einer Motordrehzahl von beispielsweise 1500 U/min = 25 U/sec folgt hieraus eine Fre-

quenz von $f = 25 \cdot 360 = 9000$ Hz. Wegen der Richtcharakteristik der Leuchtdiode leuchtet diese nur während einer Halbwelle auf, während in der anderen Halbwelle eine Leuchtpause eintritt. Die vorstehend beschriebene Art der Strichbildung eignet sich besonders für eine große Zahl von Strichen pro Umfang.

Sollen nur wenige Striche bzw. Segmente pro Umfang dargestellt werden, beispielsweise sechzehn Segmente pro Umfang, so ist $f = 400$ Hz, und es kann für die Zeitdauer einer monostabilen Kippstufe eine astabile Kippstufe freigegeben werden. Diese astabile Kippstufe gibt dann die induktive Übertragung frei.

In der Fig. 10e ist noch eine Darstellungs-Variante gezeigt, die es ermöglicht, mit zwei nebeneinander angeordneten lichtemittierenden Dioden verschiedener Farbe, z. B. grün oder rot, einen Leuchtbalken mit drei sich ändernden Farben, z. B. rot, grün und gelborange, darzustellen. Durch die Rotation der gleichzeitig leuchtenden grünen und roten Dioden wird vom Auge eine gelborange Farbe wahrgenommen. Das in der Figur gezeigte Impulsdiagramm bewirkt unter diesen Voraussetzungen etwa zur Zeit $t_1$ einen grünen Balken 56, zur Zeit $t_2$ einen gelborangen Balken 57 und zur Zeit $t_3$ einen roten Balken 58. Das zeitliche Nacheinander des Einschaltens der Dioden wirkt sich somit für das menschliche Auge als räumliches Nebeneinander aus.

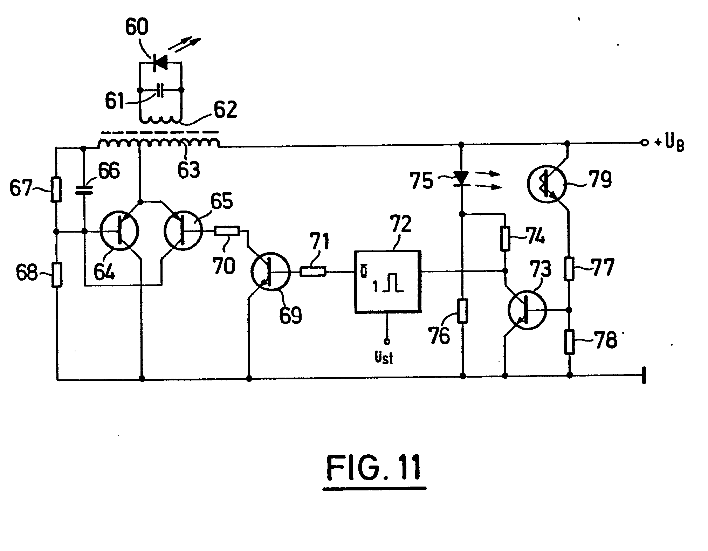

In der Fig. 11 ist eine Schaltungsanordnung näher dargestellt, die für die Erzeugung eines Leuchtbalkens mit Strichrastung geeignet ist. Eine Leuchtdiode 60 befindet sich hierbei, zusammen mit einem parallelgeschalteten Kondensator 61 und einer parallelgeschalteten Wicklung 62 auf einer rotierenden Scheibe, während die übrigen Bauelemente ortsfest angeordnet sind. Zu diesen ortsfesten Bauelementen gehört eine Primärwicklung 63, die an einem Punkt angezapft ist, wobei dieser Anzapfpunkt mit den Emittern zweier Transistoren 64, 65 verbunden ist. Der Kollektor des Transistors 65 ist mit der Basis des Transistors 64 sowie mit einem Kondensator 66 und zwei Widerständen 67, 68 verbunden, wobei der Kondensator 66 und der Widerstand 67 parallelgeschaltet sind und auch an dem einen Anschluß der Primärwicklung 63 liegen. Der Kollektor des Transistors 64 und der Widerstand 68 liegen ebenso an Masse wie der Emitter eines weiteren Transistors 69, dessen Kollektor über einen Widerstand 70 mit der Basis des Transistors 65 verbunden ist. Von der Basis des Transistors 69 führt über einen Widerstand 71 eine Verbindung auf den Ausgang einer monostabilen Kippstufe 72, deren Eingang mit dem Kollektor eines weiteren Transistors 73 verbunden ist, dessen Emitter an Masse liegt und dessen Kollektor über einen Widerstand 74 mit der Kathode einer Leuchtdiode und mit einem Widerstand 76 verbunden ist.

Die Anode der Diode 75 liegt an positivem Batteriepotential, während der zweite Anschluß des Widerstandes 76 an Masse gelegt ist.

Parallel zur Batteriespannung sind ein Lichtsensor 79 und zwei Widerstände 77, 78 vorgesehen, wobei der Verbindungspunkt zwischen den beiden Widerständen 77, 78 mit der Basis des Transistors 73 verbunden ist.

Der Oszillator für die induktive Übertragung ist mittels der beiden Transistoren 64, 65 aufgebaut, von denen der Transistor 64 den Oszillatortransistor und der Transistor 65 den Freigabetransistor bilden. Zwischen diesem Oszillator und der strom- oder spannungsgesteuerten monostabilen Kippstufe 72 ist eine Entkoppelstufe in Form des Transistors 69 geschaltet. Die Bauelemente 73 bis 78 bilden in ihrer Gesamtheit eine Lichtschranke zur Erzeugung des Startimpulses für die monostabile Kippstufe. Die Lichtschranke im engeren Sinne wird dabei durch die Leuchtdiode 75 und den Sensor 79 gebildet.

Bei einer Rotationsgeschwindigkeit der Scheibe 30 von 25 U/sec und einer Oszillatorfrequenz von 9000 Hz ergibt sich mit der Schaltung gemäß Fig. 11 eine Strichrasterung des Leuchtbalkens von 360 Strichen auf dem Umfang. Zur Darstellung eines glatten durchgehenden Leuchtbalkens braucht man nur die Oszillatorfrequenz wesentlich höher zu wählen oder durch Gleichrichtung die Leuchtdiode 60 in der positiven oder negativen Halbwelle leuchten zu lassen.

Bei der Lichtschranke wird durch eine besondere Rückführung über die Leuchtintensität der Diode ein Kippeffekt mit Hysterese erreicht. Dadurch ergeben sich sehr steilflächige Ausgangsimpulse, die unabhängig von der Geschwindigkeit der optischen Unterbrechung sind und damit exakte Startimpulse für die spannungs- oder stromgesteuerte monostabile Kippstufe sind.

Obwohl die Erfindung nur anhand einer rotierenden Scheibe beschrieben wurde, versteht es sich, daß sie auch für linear bewegliche Anordnungen verwendbar ist. Beispielsweise kann eine über zwei Rollen geführtes Band mit Leuchtelementen versehen werden, wobei dieses Band mit einer bestimmten Geschwindigkeit um die Rollen geführt wird und die Leuchtelemente definiert angesteuert werden.

Sofern verschiedene Farben durch additive Farbmischung erzeugt werden sollen, kann in vorteilhafter Weise von Leuchtdioden Gebrauch gemacht werden, die verschiedene Farben aussenden (vgl. DE-B-2 344 774, US-A-3 580 860). Auch die Verwendung von Flüssigkristallanzeigen ist möglich.

**Patentansprüche**

1. Vorrichtung zur optischen Anzeige von physikalischen Größen, mit mindestens einem Leuchtelement, das auf einem beweglichen Körper angeordnet ist, wobei das Leuchtelement zu definierten Zeiten und für vorgebbare Zeitabschnitte zum Aufleuchten gebracht werden kann, dadurch gekennzeichnet, daß mehrere aus einem oder mehreren Leuchtelementen (51,

52, 91, 92) gebildete, quer zur Bewegungsrichtung des beweglichen Körpers verlaufende Geraden auf dem beweglichen Körper vorgesehen und die Leuchtelemente (51, 52, 91, 92) isoliert ansteuerbar sind.

2. Vorrichtung nach Anspruch 1, dadurch gekennzeichnet, daß der bewegliche Körper mehrere Signalgeber (16) aufweist, die mit Signalaufnehmern (17) zusammenwirken.

- 3. Vorrichtung nach einem der vorhergehenden Ansprüche, dadurch gekennzeichnet, daß die auf einer Geraden angeordneten Leuchtelemente (51, 91, 92) dieselbe Farbe haben.

4. Vorrichtung nach Anspruch 3, dadurch gekennzeichnet, daß diejenigen Leuchtelemente, die auf verschiedene Geraden, aber in Bewegungsrichtung des beweglichen Körpers hintereinander auf dem beweglichen Körper angeordnet sind, verschiedene Farben haben, so daß sich bei Bewegung des Körpers additive Farbmischungen ergeben.

5. Vorrichtung nach einem der vorhergehenden Ansprüche, dadurch gekennzeichnet, daß als Leuchtelemente lichtemittierende Dioden (15) vorgesehen sind, die über elektrische Leitungen, Schleifringe (4, 6, 24, 25) und Bürsten (7, 8, 28, 29, 94) mit einer ortsfesten Energiequelle (12) verbindbar sind.

6. Vorrichtung nach einem der vorhergehenden Ansprüche, dadurch gekennzeichnet, daß das Leuchtelement über eine kontaktlose induktive Übertragung mit Energie versorgt wird.

7. Vorrichtung nach einem der vorhergehenden Ansprüche, dadurch gekennzeichnet, daß als Signalgeber/Signalaufnehmer Lichtschranken (37, 38, 75, 79) vorgesehen sind.

8. Vorrichtung nach einem der vorhergehenden Ansprüche, dadurch gekennzeichnet, daß das Ein- und Ausschalten der Leuchtelemente über ansteuerbare Schalter (11) erfolgt.

9. Vorrichtung nach einem der Ansprüche 1, 7 und 8, dadurch gekennzeichnet, daß zwischen dem Impulsgeber und dem Signalgeber/Signalaufnehmer (16, 17) ein einstellbares Zeitglied (18) geschaltet ist, welches die Einschalt- und Ausschaltzeit des Leuchtelements bestimmt.

10. Vorrichtung nach Anspruch 9, dadurch gekennzeichnet, daß die Ein- oder Ausschaltzeit durch eine physikalische Größe bestimmbar ist.

11. Vorrichtung nach einem der vorhergehenden Ansprüche, dadurch gekennzeichnet, daß Leuchtelemente (51, 52) derart zum Aufleuchten gebracht werden, daß längenveränderbare Strichbalken (56, 57, 58) entstehen, wobei zur Erzeugung der Lücken zwischen den Strichbalken ein Oszillator (20) mit veränderbarer Oszillatorfrequenz vorgesehen ist, dessen jeweilige Frequenz dem Ausgangssignal des Ansteuerschalters (11) überlagert wird.

12. Vorrichtung nach einem der vorhergehenden Ansprüche, dadurch gekennzeichnet, daß der bewegliche Körper eine rotierende Scheibe (1, 30) ist und die aus den Leuchtelementen (51, 52, 91, 92) gebildeten Geraden sich vom Mittelpunkt zum äußeren Rand der Scheibe (1, 30) erstreckend angeordnet sind.

13. Vorrichtung nach Anspruch 12, dadurch gekennzeichnet, daß auf der Mantelfläche des Umfangs der Scheibe (30) Leuchtelemente vorgesehen sind.

14. Vorrichtung nach Anspruch 12, dadurch gekennzeichnet, daß die Scheibe (1, 30) durch einen elektrischen Motor (3) angetrieben wird, dessen Antriebswelle (2, 35) mit dem Schaft der Scheibe (1, 30) koppelbar ist.

15. Vorrichtung nach Anspruch 12, dadurch gekennzeichnet, daß die Scheibe (1, 30) mit einer solchen Geschwindigkeit rotiert, daß die auf ihr angeordneten Leuchtelemente (51, 52, 91, 92) mit einer solchen Frequenz dem Auge dargeboten werden, daß die Verschmelzungsfrequenz des menschlichen Auges überschritten wird.

16. Vorrichtung nach einem der Ansprüche 6 und 12, dadurch gekennzeichnet, daß stationäre Zylindermäntel (33, 34) vorgesehen sind, die einen vorgegebenen Abstand zueinander aufweisen und in ihren Zwischenräumen mit elektrischen Wicklungen (45, 46) versehen sind, und daß in diese Zwischenräume, die durch die Zylindermäntel (33, 34) gebildet sind, die Zylindermäntel (47, 48) eines Rotors eingreifen, die ebenfalls mit Wicklungen (40) versehen und mit der Scheibe (30) gekuppelt sind.

17. Vorrichtung nach einem der Ansprüche 6 und 12, dadurch gekennzeichnet, daß für die induktive Ansteuerung der Leuchtelemente ein feststehender Flansch (103) mit mehreren Primärwicklungen (107, 108, 109) tragenden Rollenkernen (104, 105, 106) vorgesehen ist, wobei diesen Rollenkernen (104, 105, 106) jeweils eine Sekundärwicklung (110, 111, 112) des die Leuchtelemente tragenden rotierenden Teils (30) zugeordnet ist.

**Claims**

1. Device for the visual display of physical quantities, with at least one lamp element which is located on a movable body and which can be made to light up at specific times and for predeterminable periods of time, characterised in that several straight lines formed from one or more lamp elements (51, 52, 91, 92) and running transversely to the direction of movement of the movable body are provided on the movable body, and the lamp elements (51, 52, 91, 92) are selectable separately.

2. Device according to claim 1, characterised in that the movable body has several signal transmitters (16) which interact with signal receivers (17).

3. Device according to one of the preceding claims, characterised in that the lamp elements (51, 91, 92) arranged on one straight line have the same colour.

4. Device according to claim 3, characterised in that those lamp elements which are arranged on the movable body on different straight lines, but

in succession in the direction of movement of the movable body have different colours, so that when the body moves additive colour mixtures are abtained.

5. Device according to one of the preceding claims, characterised in that there are as lamp elements light-emitting diodes (15) which can be connected to a fixed power source (12) via electrical leads, slip rings (4, 6, 24, 25) and brushes (7, 8, 28, 29, 94).

6. Device according to one of the preceding claims, characterised in that the lamp element is supplied with power via non-contact inductive transmission.

7. Device according to one of the preceding claims, characterised in that light barriers (37, 38, 75, 79) are provided as signal transmitters/signal receivers.

8. Device according to one of the preceding claims, characterised in that the lamp elements are switched on and off via selectable switches (11).

9. Device according to one of claims 1, 7 and 8, characterised in that connected between the pulse generator and the signal transmitter/signal receiver (16, 17) is an adjustable timing element (18) which determines the switching-on and switching-off time of the lamp elements.

10. Device according to claim 9, characterised in that the switching-on or switching-off time can be determined by means of a physical quantity.

11. Device according to one of the preceding claims, characterised in that lamp elements (51, 52) are made to light up in such a way that line bars (56, 57, 58) of variable length are obtained, and to produce the gaps between the line bars there is an oscillator (20) of variable oscillator frequency, the particular frequency of which is superimposed on the output signal of the selection switch (11).

12. Device according to one of the preceding claims, characterised in that the movable body is a rotating disc (1, 30) and the straight lines formed by the lamp elements (51, 52, 91, 92) are arranged to extend from the centre point of the disc (1, 30) to its outer edge.

13. Device according to claim 12, characterised in that lamp elements are provided on the shell surface of the periphery of the disc (30).

14. Device according to claim 12, characterised in that the disc (1, 30) is driven by an electric motor (3), the drive shaft (2, 35) of which can be coupled to the stem of the disc (1, 30).

15. Device according to claim 12, characterised in that the disc (1, 30) rotates at such a speed that the lamp elements (51, 52, 91, 92) located on it are brought into view at such a frequency that the fusion frequency of the human eye is exceeded.

16. Device according to one of claims 6 and 12, characterised in that there are stationary cylinder shells (33, 34) which are at a predetermined distance from one another and which are provided with electrical windings (45, 46) in their interspaces, and in that there engage into these interspaces formed by the the cylinder shells (33, 34) the cylinder shells (47, 48) of a rotor which are likewise provided with windings (40) and are coupled to the disc (30).

17. Device according to one of claims 6 and 12, characterised in that for the inductive selection of the lamp elements there is a fixed flange (103) with several roll cores (104, 105, 106) carrying primary windings (107, 108, 109) a secondary winding (110, 111, 112) of the rotating part (30) carrying the lamp elements being assigned to each of these roll cores (104, 105, 106).

**Revendications**

1. Dispositif pour afficher par voie optique des grandeurs physiques, qui comprend, au moins, un élément lumineux disposé sur un corps mobile, cet élément pouvant être allumé à des instants définis et pendant des périodes de temps prédéterminées, dispositif caractérisé en ce que plusieurs droites, formées d'un ou de plusieurs éléments lumineux ou luminescents (51, 52, 91, 92), s'étendant transversalement à la direction du mouvement du corps mobile, sont prévues sur ce dernier et en ce que les éléments luminescents (51, 52, 91, 92) peuvent être commandés séparément.

2. Dispositif selon la revendication 1, caractérisé en ce que le corps mobile comporte plusieurs générateurs (16) de signaux qui coopèrent avec des récepteurs (17) de signaux.

3. Dispositif selon l'une des revendications précédentes, caractérisé en ce que les éléments luminescents ou lumineux (51, 91, 92) sont disposés le long d'une droite et ont tous la même couleur.

4. Dispositif selon la revendications 3, caractérisé en ce que les éléments luminescents qui sont disposés sur différentes droites, mais l'un derière l'autre dans la direction du mouvement du corps mobile, sur ce dernier, ont différentes couleurs de sorte que, quand ledit corps est en mouvement, des mélanges de couleurs sont produits par addition de couleurs.

5. Dispositif selon l'une quelconque des revendications précédentes, caractérisé en ce qu'on prévoit comme éléments lumineux des diodes électroluminescentes (15) qui peuvent être reliées, par des conducteurs électriques, des bagues collectrices (4, 6, 24, 25) et des balais (7, 8, 28, 29, 94), à une source fixe (12) d'énergie électrique.

6. Dispositif selon l'une quelconque des revendications précédentes, caractérisé en ce que l'élément lumineux est alimenté en énergie électrique par une transmission inductive sans contact physique.

7. Dispositif selon l'une quelconque des revendications précédentes, caractérisé en ce que les générateurs et récepteurs de signaux sont constitués par des barrières photo-électriques (37, 38, 75, 79).

8. Dispositif selon l'une quelconque des revendications précédentes, caractérisé en ce que l'allumage et l'extinction des éléments lumineux ou luminescents s'effectuent au moyen d'interrupteurs commandés (11).

9. Dispositif selon l'une quelconque des revendications 1, 7 ou 8, caractérisé en ce que, entre le générateur d'impulsions et le générateur-récepteur de signaux (17, 16), est intercalé un organe de temporisation réglable (18), qui détermine le temps d'allumage et d'extinction de l'élément lumineux.

10. Dispositif selon la revendication 9, caractérisé en ce que le temps d'allumage ou d'extinction peut être déterminé par une grandeur physique.

11. Dispositif selon l'une quelconque des revendications précédentes, caractérisé en ce que l'allumage des éléments lumineux ou luminescents (51, 52) est réalisé de manière qu'il en résulte des barres (56, 57, 58) de longueur variable et en ce que, pour produire des intervalles entre ces barres, on utilise un oscillateur (20) ayant une fréquence d'oscillation variable, que l'on superpose au signal de sortie de l'interrupteur de commande (11).

12. Dispositif selon l'une quelconque des revendications précédentes, caractérisé en ce que le corps mobile est un disque rotatif (1, 30) et en ce que la droite formée par les éléments lumineux ou luminescents (51, 52, 91, 92) s'étend du centre du disque (1, 30) à son bord extérieur.

13. Dispositif selon la revendication 12, caractérisé en ce que sur la surface d'enveloppe du pourtour du disque (30) sont prévus des éléments lumineux ou luminescents.

14. Dispositif selon la revendication 12, caractérisé en ce que le disque (1, 30) est entraîné par un moteur électrique (3) dont l'arbre (2, 35) de sortie peut être accouplé à l'axe du disque (1, 30).

15. Dispositif selon la revendication 12, caractérisé en ce que le disque (1, 30) tourne à une vitesse telle que les éléments lumineux ou luminescents (51, 52, 91, 92) qu'il porte passent devant l'oeil de l'observateur à une cadence excédant la fréquence de fusion des images par l'oeil humain.

16. Dispositif selon la revendication 6 ou 12, caractérisé en ce qu'il comporte des enveloppes cylindriques fixes (33, 34) disposées à une distance prédéterminée l'une de l'autre et dans l'intervalle desquelles sont prévus des enroulements électriques (45, 46), et en ce que, dans les intervalles formés par les enveloppes cylindriques (33, 34) s'engagent les enveloppes cylindriques (47, 48) d'un rotor qui porte également des enroulements (40) et qui est accouplé au disque (30).

17. Dispositif selon l'une des revendications 6 ou 12, caractérisé en ce qu'il est prévu, pour la commande inductive des éléments lumineux ou luminescents, une bordure fixe (103) comportant plusieurs noyaux (104, 105, 106), en forme de poulie, portant des enroulements primaires (107, 108, 109), et un ce qu'à chacun de ces noyaux (104, 105, 106) est associé un enroulement secondaire (110, 111, 112) de l'organe rotatif (30) portant les éléments lumineux ou luminescents.

## FIG.1

## FIG.3

## FIG.2

2/5

43 42 30 41

40 36

35 34 39 37 38

33

31 32

## FIG. 4

32

33

44 34

45 46

35

37 38

## FIG. 5

FIG.6

FIG.7

0 017 081

FIG. 8

FIG.9

FIG.10b

FIG.10a

FIG.10c

FIG.10d

FIG.10e

15

# FIG. 11